# FASCICULE DE BREVET EUROPEEN

(11) **EP 0 593 338 B1**
(45) Date de publication et mention de la délivrance du brevet: **04.12.1996**
(21) Numéro de dépôt: 93402464.7
(22) Date de dépôt: 07.10.1993
(51) Int. Cl.: B23P 19/00, B23P 19/06, B23Q 7/00

(54) **Dispositif pour réaliser l'assemblage de deux pièces dans un poste de vissage**
Einrichtung zur Zusammensetzung von zwei Teilen in einer Verschraubungsstation
Device for making an assembly of two pieces in a screwing workstation

(30) Priorité: 13.10.1992 FR 9212222
(43) Date de publication de la demande: 20.04.1994
(73) Titulaire: RENAULT AUTOMATION, F-92100 Boulogne (FR)
(72) Inventeur: Joyaux, Jean-Marie, F-1510 Janville S/Juine (FR)
(74) Mandataire: Robert, Jean-Pierre

(56) Documents cités:
- DE-A- 3 319 885
- US-A- 4 827 598
- US-A- 5 014 405
- SOVIET INVENTIONS ILLUSTRATED Week 8446, 2 Janvier 1985 Derwent Publications Ltd., London, GB; AN 84-286917/46 & SU-A-1 024 206 (POPKO)
- SOVIET INVENTIONS ILLUSTRATED Week 8446, 2 Janvier 1985 Derwent Publications
- Ltd., London, GB; AN 84-286917/46 & SU- A-1 024 206 (POPKO)

## Description

Dans certaines unités de montage de pièces, comme par exemple la fixation d'éléments rapportés sous les caisses de véhicules automobiles, l'assemblage est réalisé par vissage. Les pièces à solidariser les unes aux autres sont mises en place sur un support, lequel support est ensuite déplacé le long d'une chaîne d'assemblage équipée de plusieurs postes à l'endroit desquels sont disposés des outils motorisés par exemple des visseuses électriques.

Le support est donc convoyé jusqu'au droit d'un poste de vissage. L'outil est alors dans une position rétractée, par exemple une position basse s'il s'agit d'un assemblage de pièces à la paroi inférieure de la caisse d'automobile. On commande l'élévation de cet outil pour son accouplement avec un organe de transmission du mouvement rotatif qui est porté par le support et qui est équipé à son extrémité, par exemple, d'une vis à mettre en place. Le document US-A-4 827 598 décrit un dispositif de ce genre. La précision de la position d'arrêt du support dans le référentiel du poste est relative, du fait notamment des tolérances de la fabrication des pièces qui le constituent, de l'usure et des jeux nécessaires au fonctionnement de l'ensemble, si bien qu'il existe toujours un mauvais alignement entre l'organe motorisé de vissage qui est à poste fixe et l'organe de transmission du mouvement et porteur de l'organe à implanter. Dans le document US-A-4 827 598 une solution complexe est décrite pour résoudre ce problème : la visseuse est portée par un robot qui est commandé en réponse au signal emis par un capteur de la position du support dans le référentiel du poste

En outre, la mise en place de la structure de caisse du véhicule sur le support de caisse est également réalisée avec une certaine tolérance qu'il n'est guère possible de réduire à une valeur inférieure à quelques millimètres. En effet les pièces en jeu sont généralement issues de tôlerie et malgré tout le soin apporté à leur fabrication et leur montage sur le support, leur bridage sur ce dernier entraîne à cause, entre autres, de la souplesse des éléments mis en jeu, des déformations et des déplacements obligatoires qui ne sont pas maîtrisables avec précision. Il résulte de cette nature des chose un mésalignement systématique entre la vis à implanter et l'organe solidaire de la caisse qui doit la recevoir.

Le vissage automatique à réaliser dans ces conditions doit prendre en compte ces contraintes pour supprimer les risques d'impossibilité de montage et diminuer les efforts notamment de flexion et de fatigue, qu'un mauvais alignement engendre dans la chaîne de transmission du mouvement et de l'effort de serrage.

L'invention entend proposer une solution simple à ce problème permettant de supprimer les risques d'impossibilité de montage ainsi que les efforts parasites dans les dispositifs de vissage d'une chaîne d'assemblage en introduisant un degré de liberté plan sur plan dans la chaîne de transmission du couple de vissage tout en permettant, au niveau de cette liaison souple, le passage du couple. L'invention permet également la mise en place de capteurs plus sensibles et plus précis pour le contrôle automatique de l'opération et de sa bonne fin.

A cet effet, l'invention a donc pour objet un dispositif pour réaliser l'assemblage par vissage d'au moins deux pièces comportant une platine de support pour les deux pièces préassemblées, mobile par rapport à un poste fixe, avec des moyens d'indexation de sa position par rapport à ce poste fixe, un organe moteur rotatif équipant le poste fixe et mobile dans ce dernier entre une position escamotée éloignée des pièces et une position active rapprochée de celles-ci, des moyens de transmission du mouvement de rotation de l'organe moteur s'étendant entre ce dernier et un organe d'assemblage des deux pièces dans lequel, les moyens de transmission étant en deux parties séparables dans la direction du mouvement de l'organe moteur, une des parties est accouplée à l'organe moteur et solidaire du poste fixe au moyen d'un support librement mobile dans un plan parallèle au déplacement de la platine de support des pièces préassemblées.

Cette disposition permet de prendre en compte les incertitudes qui peuvent exister quant à l'indexation de la platine de support des pièces par rapport au poste fixe.

Dans un mode préféré de réalisation, l'autre partie des moyens de transmission portant l'organe d'assemblage est solidaire de la platine au moyen d'un support librement mobile par rapport à cette platine dans un plan sensiblement perpendiculaire à la direction de vissage. Cette disposition permet, au moment où on équipe la platine des pièces à assembler, de correctement mettre en place l'organe qui est destiné à les réunir.

En outre, les parties des moyens de transmission présentent des moyens d'accouplement en rotation découplables associés à des moyens de guidage pour permettre leur préalignement lors du mouvement de l'organe moteur, de sa position escamotée vers sa position active au cours duquel l'accouplement se produit.

Ces moyens de guidage comportent deux fourreaux stationnaires en rotation solidaires pour chacun du support de la partie correspondante des moyens de transmission, l'un d'eux présentant à son extrémité située en regard de l'autre un évasement conique formant surface de came pour l'alignement des moyens d'accouplement.

Enfin, la partie des moyens de transmission portés par la platine possède un organe d'indexation de sa position par rapport aux pièces préassemblées.

D'autres caractéristiques et avantages de l'invention ressortiront d'une description d'un mode de réalisation donnée ci-après à titre d'exemple.

Il sera fait référence au dessin unique qui représente en coupe un dispositif d'assemblage par vissage conforme à l'invention.

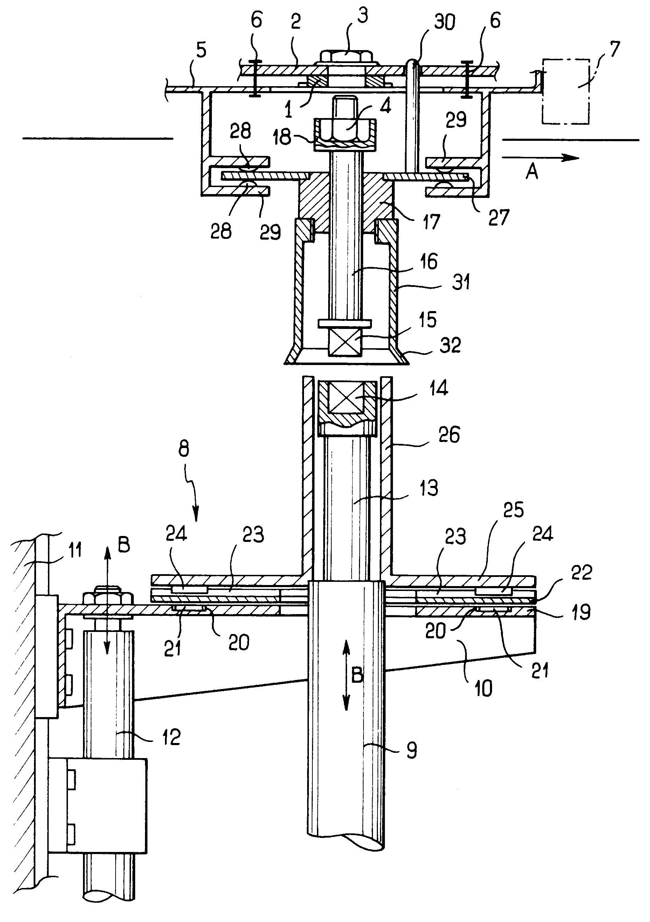

Sur cette figure 1 et 2 représentent les pièces à assembler. La pièce 2 porte par exemple écrou 3 destiné à recevoir une vis 4.

Les pièces 1 et 2 sont préassemblées sur une platine de support 5 au moyen d'éléments de bridage 6. Cette platine de support est susceptible d'être déplacée le long d'une chaîne de montage grâce à des moyens qui ne sont pas représentés tels que des convoyeurs ou des chaînes de transport du genre atelier flexible. Ces moyens de convoyage comportent de manière connue des dispositions pour indexer chaque platine 5 en position à l'endroit d'un poste de travail qui peut comporter différents outils pour réaliser les montages, les assemblages, voire les usinages nécessaires. On a représenté à la figure en 7 une butée qui symbolise les moyens d'arrêt et d'indexation d'une platine 5 qui parvient à cette butée par un mouvement horizontal symbolisé par la flèche A au-dessus d'un poste fixe 8 par exemple de vissage de la vis 4 dans l'écrou 3 pour rassembler les pièces 1 et 2.

Le poste 8 comporte un organe moteur 9 de vissage qui peut être animé à l'intérieur de ce poste d'un mouvement vertical B. Ce mouvement lui est transmis par l'intermédiaire d'un support 10 qui peut coulisser le long d'un guide fixe 11 et qui est attelé à un vérin 12. Ainsi l'organe moteur 9 peut-il être placé dans une position basse ou position escamotée tant que la platine 5 n'est pas parvenue à sa position d'indexation au-dessus du poste 8 et dans une position haute ou position active dans laquelle il réalise la position de vissage, c'est-à-dire il anime la vis 4 d'un mouvement de rotation tout en accompagnant son mouvement ascendant lors de sa pénétration dans l'écrou 3.

Entre l'organe moteur 9 et la vis 4, il existe des moyens de transmission du mouvement rotatif de l'organe moteur 9 qui sont en deux parties. Une première partie est constituée par l'arbre de sortie 13 de l'organe moteur 9, équipé à son extrémité d'un orifice polygonal 14 qui est capable de coopérer avec l'extrémité 15 également polygonale de la seconde partie de ces moyens de transmission qui est ici constituée par un arbre 16 monté tournant dans un palier 17 solidaire de la platine 5. L'extrémité de l'arbre 16 possède un logement 18 capable d'accueillir la tête de la vis 4 pour l'entraîner en rotation.

L'organe moteur 9 et son arbre de sortie 13 sont montés sur le support 10 par l'intermédiaire d'un dispositif connu en lui-même, conférant à cet organe moteur deux degrés de libertés dans le plan horizontal qui est parallèle à la direction A de circulation des platines 5. Plus précisément, le support 10 possède une plaque supérieure 19 équipée de deux rainures 20 perpendiculaires au plan de la figure dans lesquelles sont susceptibles de coulisser des tenons 21 solidaires de la surface inférieure d'une plaque intermédiaire 22 dont la surface supérieure possède des rainures 23 perpendiculaires aux rainures 20 de la plaque 19. Dans ces rainures 23 des tenons 24 sons susceptibles de coulisser, ces tenons 24 étant eux-mêmes solidaires d'une plaque 25 à laquelle est attelé et fixé l'organe 9. Cette plaque 25 est prolongée par un fourreau 26 qui entoure l'arbre de sortie 13 de l'organe moteur 9. On comprend que par le jeu de ces rainures perpendiculaires dans lesquelles sont guidées les plaques 22 et 25, l'organe 9 et donc son arbre de sortie 13 peuvent être déplacés dans n'importe quelle direction du plan de la plaque 19 du support 10, tout mouvement de rotation de l'organe 9 autour de son axe par rapport au support étant cependant impossible du fait de l'accouplement décrit ci-dessus. On aura prévu, également de manière connue, de limiter l'amplitude des mouvements possibles de l'organe moteur 9 dans ce plan en attelant les plaques 19 et 25 par un organe élastique déformable, non représenté, du genre par exemple silent bloc, autorisant un mouvement relatif de la plaque 25 par rapport à la plaque 19 de quelques millimètres seulement, c'est-à-dire de l'amplitude juste nécessaire à prendre en compte les incertitudes de positionnement de la platine 5 par rapport au poste fixe 8.

La seconde partie 16 des moyens de transmission est donc portée par la platine 5 au moyen du palier 17 qui lui-même possède deux degrés de liberté par rapport à la platine 5 dans un plan sensiblement perpendiculaire à la direction de vissage c'est-à-dire à l'axe de l'arbre 16.

Ces degrés de liberté sont ici obtenus par un plateau 27 solidaire du palier 17 maintenu par rapport à la platine 5 entre des supports roulants 28 qui, de manière connue en elle-même, sont constitués par des billes encagées dans une sorte de chape 29 que comporte la platine 5 sous sa partie supportant les pièces 1 et 2, ces billes 28 autorisant le plateau 27 à se déplacer dans son plan.

Le plateau 27 comporte un doigt 30 d'indexation grâce auquel, lors du préassemblage des pièces 1 et 2 sur la platine 6, le palier 17 est mis en position de sorte que la vis 4 soit correctement alignée avec l'écrou 3. Cette caractéristique permet de prendre en compte les incertitudes de mise en position des pièces 1 et 2 par rapport à la platine 5 lors de leur bridage sur celle-ci. On évite ainsi que de trop grandes contraintes naissent dans les organes de transmission du mouvement lors d'un vissage qui souffrirait d'un désalignement. Cette indexation peut d'ailleurs s'opérer avec un léger jeu de manière à laisser une certaine liberté à l'arbre 16 donc à la vis 4 pour s'engager correctement dans l'écrou 3.

On notera que l'arbre 16 est non seulement monté tournant dans le palier 17 mais également peut coulisser dans ce dernier entre une position basse telle que celle représentée à la figure et une position haute dans laquelle la vis 4 est complètement vissée dans l'écrou 3.

Le palier 17 est prolongé vers le bas c'est-à-dire au niveau des moyens d'accouplement 15 de l'arbre 16 à l'arbre 13, par un fourreau 31 dont la partie inférieure 32 est évasée en forme de cône, et dont le diamètre intérieur est supérieur au diamètre extérieur du fourreau 26.

En fonctionnement, lorsque la platine 5 est immobilisée par les moyens d'indexation 7 au-dessus du poste fixe 8, la platine étant prééquipée des pièces 1,2 et l'arbre 16 étant préalablement pourvu d'une vis 4 dans son logement 18, on commande par le vérin 12 l'élévation de la visseuse 9 en même temps que sa rotation à petite vitesse. Le fourreau 26 rencontre le cône 32 avant que les moyens d'accouplement 14 et 15 coopèrent et le cône 32 permet un alignement de ses moyens 14 et 15 grâce à la possibilité de mouvements plans que possède la visseuse 9 par rapport à son support 10. Lorsque les éléments d'accouplement 14, 15 sont alignés, ils peuvent donc pénétrer l'un dans l'autre et le mouvement de l'arbre 13 est transmis à l'arbre 16. La poursuite de l'élévation de la visseuse 9 sous la platine 5 entraîne donc l'élévation de l'arbre 16 donc de la vis 4 donc qui pénêtre dans les pièces 1 et 2 à assembler et ce sans qu'il y ait de contraintes parasites engendrées par des défauts d'alignement.

Cette disposition est particulièrement intéressante car elle permet de mettre en oeuvre sur les moyens de transmission, des capteurs simples afin de, par exemple, contrôler le couple de serrage et la distance de pénétration de la vis 4. Ces capteurs sont en effet débarrassés de tout effort parasite qui pourrait fausser les mesures ou du moins demander un traitement de signal plus compliqué pour filtrer les composantes de ce signal dues aux efforts parasites engendrés par un désalignement.

## Revendications

1. Dispositif pour réaliser l'assemblage par vissage d'au moins deux pièces (1,2) comportant une platine de support (5) pour les deux pièces préassemblées, mobile par rapport à un poste fixe (8), avec des moyens d' indexation (7) de sa position par rapport au poste fixe, un organe moteur (9) rotatif équipant le poste fixe (8) et mobile dans ce dernier entre une position escamotée éloignée des pièces (1,2) et une position active rapprochée de celles-ci, des moyens de transmission (13,16) du mouvement de rotation de l'organe moteur (9) en deux parties (13,16) séparables dans la direction (B) du mouvement de l'organe moteur, s'étendant entre ce dernier et un organe (4) d'assemblage des deux pièces, caractérisé en ce que l'une des parties (13) des moyens de transmission est accouplée à l'organe moteur et solidaire du poste fixe (8) au moyen d'un support (19 à 25) librement mobile dans un plan parallèle au déplacement (A) de la platine de support (5) des pièces préassemblées.

2. Dispositif selon la revendication 1, caractérisé en ce que l'autre partie (16) des moyens de transmission porte l'organe (4) d'assemblage et est solidaire de la platine (5) au moyen d'un support (27) librement mobile par rapport à la platine (5) dans un plan sensiblement perpendiculaire à la direction (B) de vissage.

3. Dispositif selon la revendication 1 ou la revendication 2, caractérisé en ce que les parties (13, 16) des moyens de transmission présentent des moyens d'accouplement (14,15) en rotation, découplables, associés à des moyens de guidage (26,31) pour permettre leur préalignement lors du mouvement de l'organe moteur (9) de sa position escamotée vers sa position active au cours duquel l'accouplement se produit.

4. Dispositif selon l'une quelconque des revendications 2 et 3 caractérisé en ce que la partie (16) des moyens de transmission portée par la platine (5) possède un organe d'indexation (30) de sa position par rapport aux pièces préassemblées (1,2).

5. Dispositif selon la revendication 3, caractérisé en ce que les moyens de guidage comportent deux fourreaux (26,31) stationnaires en rotation solidaires pour chacun du support (19 à 25, 27) de la partie correspondante (13,16) des moyens de transmission, l'un (31) d'eux présentant à son extrémité située en regard de l'autre (26) un évasement (32) conique formant surface de came pour l'alignement des moyens d'accouplement (14,15).

## Claims

1. Apparatus for effecting assembly by screwing of at least two members (1, 2), comprising a support plate (5) for the two pre-assembled members, which is movable with respect to a feed station (8), with means (7) for indexing its position with respect to the feed station, a rotary drive member (9) equipping the feed station (8) and movable therein between a retracted position in which it is moved away from the members (1, 2) and an active position in which it is moved towards them, means (13, 16) for transmitting the rotary movement of the drive member (9) in two parts (13, 16) which are separable In the direction (B) of the movement of the drive member, extending between the latter and a member (4) for assembly of the two members (1, 2), characterised in that one of the parts (13) of the transmission means is connected to the drive member and feed with respect to the feed station (8) by means of a support (19 to 25) freely movable in a plane parallel to the displacement (A) of the support plate (5) for the pre-assembled members.

2. Apparatus according to claim 1 characterised in that the other part (16) of the transmission means carries the assembly member (4) and is feed with respect to the plate (5) by means of a support (27) freely movable with respect to the plate (5) in a plane substantially perpendicular to the screwing direction (B).

3. Apparatus according to claim 1 or claim 2 characterised in that the parts (13, 16) of the transmission means have disconnectable rotational coupling means (14, 15) associated with guide means (26, 31) to permit pre-alignment thereof in the movement of the drive member (9) from its retracted position towards its active position, in the course of which coupling occurs.

4. Apparatus according to either one of claims 2 and 3 characterised in that the part (16) of the transmission means which is carried by the plate (5) has a member (30) for indexing of its position with respect to the pre-assembled members (1, 2).

5. Apparatus according to claim 3 characterised in that the guide means comprise two sleeves (26, 31) which are stationary in respect of rotational movement and which are feed for each with respect to the support (19 to 25, 27) of the corresponding part (13, 16) of the transmission means, one (31) of them having at its end disposed facing the other (26) a conical enlargement portion (32) forming a cam surface for aligning the coupling means (14, 15).

## Patentansprüche

1. Vorrichtung zum Herstellen einer Verbindung zwischen mindestens zwei Teilen (1, 2) durch Verschrauben, mit einer Trägerplatte (5) für die beiden zur Montage vorbereiteten Teile, die relativ zu einem festen Montageplatz (8) bewegbar ist, mit Mitteln (7) zum Positionieren der Trägerplatte relativ zum festen Montageplatz, einem Drehantriebselement (9), das am festen Montageplatz (8) vorgesehen ist und dort zwischen einer zurückgezogenen Position, die von den Teilen (1, 2) beabstandet ist, und einer an die Teile angenäherten aktiven Position bewegbar ist, mit Mitteln (13, 16) zum Übertragen der Drehbewegung des Antriebselementes (9), die zwei Teile (13, 16) enthalten, die in Richtung (B) der Bewegung des Antriebselementes voneinander abkoppelbar sind und sich zwischen dem Antriebselement und einem Element (4) zum Verbinden der beiden Teile erstrecken, dadurch **gekennzeichnet**, daß der eine Teil (13) der Übertragungsmittel mit dem Antriebselement gekoppelt und über einen Träger (19 bis 25), der in einer Ebene parallel zur Verschiebung (A) der Trägerplatte (5) der zur Montage vorbereiteten Teile frei beweglich ist, mit dem festen Montageplatz (8) verbunden ist.

2. Vorrichtung nach Anspruch 1, dadurch **gekennzeichnet**, daß der andere Teil (16) der Übertragungsmittel das Verbindungselement (4) trägt und mit der Platte (5) über einen Träger (27) verbunden ist, der relativ zur Platte (5) in einer Ebene im wesentlichen senkrecht zur Schraubrichtung (B) frei beweglich ist.

3. Vorrichtung nach Anspruch 1 oder Anspruch 2, dadurch **gekennzeichnet**, daß die Teile (13, 16) der Übertragungsmittel voneinander abkoppelbare Mittel (14, 15) zum drehfesten Koppeln haben, die mit Führungsmitteln (26, 31) verbunden sind, um bei der Bewegung des Antriebselementes (9) aus seiner zurückgezogenen Position in seine aktive Position, während der die Kopplung hergestellt wird, ein vorheriges Ausrichten der Kopplungsmittel zu ermöglichen.

4. Vorrichtung nach einem der Ansprüche 2 oder 3, dadurch **gekennzeichnet**, daß der an der Platte (5) angeordnete Teil (16) der Übertragungsmittel ein Element (30) zum Positionieren des Teiles (16) relativ zu den zur Montage vorbereiteten Teilen (1, 2) enthält.

5. Vorrichtung nach Anspruch 3, dadurch **gekennzeichnet**, daß die Führungsmittel zwei nicht drehbare Hülsen (26, 31) enthalten, die mit dem jeweiligen Träger (19 bis 25, 27) des zugehörigen Teils (13, 16) der Übertragungsmittel verbunden sind, wobei die eine Hülse (31) an ihrem der anderen Hülse (26) zugewandten Ende eine konische Aufweitung (32) hat, die eine Nockenfläche für das Ausrichten der Kupplungsmittel (14, 15) zueinander bildet.
